# EUROPEAN PATENT APPLICATION

(11) **EP 4 465 616 A1**
(43) Date of publication of application: **20.11.2024**
(21) Application number: 24150142.8
(22) Date of filing: 03.01.2024
(51) Int. Cl.: H04L 67/55, H04W 4/38, H04W 4/50

(54) **INFORMATION COMMUNICATION SYSTEM, CONTROL DEVICE, AND INFORMATION COMMUNICATION METHOD**

(30) Priority: 18.05.2023 JP 2023082401
(71) Applicant: TOYOTA JIDOSHA KABUSHIKI KAISHA, Toyota-shi, Aichi-ken 471-8571 (JP)
(72) Inventor: SHAO, Xiao, Toyota-shi, Aichi-ken 471-8571 (JP); OKADA, Kazuya, Toyota-shi, Aichi-ken 471-8571 (JP); KANEKO, Naoya, Toyota-shi, Aichi-ken 471-8571 (JP); MA, Jing, Toyota-shi, Aichi-ken 471-8571 (JP); ASAOKA, Takuya, Toyota-shi, Aichi-ken 471-8571 (JP)
(74) Representative: Simmons & Simmons

(57) **Abstract**

An information communication system (1) is configured to: on request from a requestor, respond with information relating to a detection target; to receive a frequency of responding with the information; and to respond with the information based on the received frequency.

## Description

### BACKGROUND OF THE INVENTION

### 1. Field of the Invention

This disclosure relates to an information communication system, a control device, and an information communication method.

### 2. Description of Related Art

3GPP TR 22.837 V1.0.0 (2023-03) describes a use case and potential requirements for functional improvement of fifth-generation mobile communication systems (also referred to as "5G systems" or "5G networks"). In 5G systems, as a functional improvement, sensing services responding to various targets or applications are desired. Such sensing services relate to, for example, autonomous driving/assisted driving, vehicle 2X (V2X), unmanned aerial vehicles (UAVs), three-dimension (3D) map reconstruction, smart cities, smart homes, factories, medical care, and the oceanographic sector.

However, in information communication systems, such as long-term evolution (LTE), 4th generation (4G), and 5th generation (5G), the configuration inside a core network that provides a sensing service, an interface between the configuration inside the core network and an external system outside the core network, etc. are not clear.

### SUMMARY OF THE INVENTION

This disclosure provides a technology that allows an information communication system to efficiently provide information by sensing.

A first aspect of this disclosure is an information communication system including a controller. The controller is configured to, on request from a requestor, respond with information relating to a detection target. The controller is configured to receive an indication of a frequency at which the controller should respond with the information, and to respond with the information based on the received indication.

In the first aspect, the controller may be configured to receive, from the requestor, a detection condition for detecting the information and a different detection frequency according to the detection condition.

In the first aspect, the detection condition may include at least one of whether the detection target is moving, a moving speed of the detection target, a size of the detection target, a history of the information in the detection target, an area where the detection target is located, a position of the detection target, and a degree of confidence required for the information.

In the first aspect, the information communication system may include a detector configured to detect information relating to the detection target. The controller may be configured to subscribe to detection by specifying the detection frequency and the detection condition to the detector. The detector may be configured to notify the controller of the information that satisfies the detection condition. The controller may be configured to notify the requestor of the information notified from the detector.

In the first aspect, the detector may be configured to change the detection frequency according to the information to be detected.

In the first aspect, the information may be dynamic information on a target relating to geographical information when the target undergoes temporal changes.

In the first aspect, the controller may be configured to receive a plurality of detection conditions identified by identification information. Each of the detection conditions may be associated with a selection condition. The controller may be configured to select the detection condition that satisfies the selection condition and select the information relating to the detection target.

A second aspect of this disclosure is a control device included in an information communication system configured to, on request from a requestor, respond with information relating to a detection target. The control device includes a processor. The processor is configured to receive an indication of a frequency at which the processor should respond with the information, and to respond with the information based on the received indication.

In the second aspect, the processor may be configured to receive, from the requestor, a detection condition for detecting the information and a different detection frequency according to the detection condition.

In the second aspect, the detection condition may include at least one of whether the detection target is moving, a moving speed of the detection target, a size of the detection target, a history of the information in the detection target, an area where the detection target is located, a position of the detection target, and a degree of confidence required for the information.

In the second aspect, the information may be dynamic information on a target relating to geographical information when the target undergoes temporal changes.

In the second aspect, the processor may be configured to receive a plurality of detection conditions identified by identification information. Each of the detection conditions may be associated with a selection condition. The processor may be configured to select the detection condition that satisfies the selection condition and select the information relating to the detection target.

A third aspect of this disclosure is an information communication method for, on request from a requestor, responding with information relating to a detection target. The information communication method includes receiving an indication of a frequency at which a response the information should be sent, and responding with the information based on the received indication.

In the third aspect, the information communication method may include receiving, from the requestor, a detection condition for detecting the information and a different detection frequency according to the detection condition.

In the third aspect, the detection condition may include at least one of whether the detection target is moving, a moving speed of the detection target, a size of the detection target, a history of the information in the detection target, an area where the detection target is located, a position of the detection target, and a degree of confidence required for the information.

In the third aspect, the information communication method may include detecting information relating to the detection target and changing the detection frequency according to the detected information.

In the third aspect, the information may be dynamic information on a target relating to geographical information when the target undergoes temporal changes.

In the third aspect, the information communication method may include receiving a plurality of detection conditions identified by identification information, and selecting the detection condition that satisfies a selection condition and selecting the information relating to the detection target. Each of the detection conditions may be associated with the selection condition.

According to the first aspect, the second aspect, and the third aspect, information by sensing can be efficiently provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing components (constituent elements) composing a fifth-generation mobile communication system;
FIG. 2 is a diagram showing an example of the configuration of data centers forming a 5GC;
FIG. 3 is an explanatory diagram of an information processing system according to an embodiment;
FIG. 4 is a diagram showing an example of the configuration of an information processing device;
FIG. 5 is a diagram showing an example of the configuration of a terminal;
FIG. 6 is a sequence chart showing an example of processing of sensing information in the information communication system;
FIG. 7 is a flowchart showing an example of processing by which a SENSING notifies an NEF of information that satisfies sensing conditions;
FIG. 8 is a flowchart showing an example of processing by a receiver;
FIG. 9 is a chart showing an example of processing by the NEF and the SENSING; and
FIG. 10 is a flowchart showing an example of processing by the SENSING according to a modified example.

### DETAILED DESCRIPTION OF EMBODIMENTS

An information communication system, a control device, and an information communication method of embodiments will be described below with reference to the drawings. On request from a requestor, the information communication system responds with information relating to a detection target. The information communication system includes a control unit that receives an indication of a frequency at which the control unit should respond with information and responds with information based on the received indication. The frequency is also called a refresh rate.

The information communication system is an information communication system based on the standard of a 5G system or a later system. The requestor may be a device, a UE, a server, or the like in another network outside the information communication system. Further, the requestor may be one of a constituent element called a Network Function (NF) or a constituent element called an Application Function (AF) inside the information communication system. Processing executed by a control unit of the information communication system provides a sensing service based on a standard to a requestor (also called a receiver) of information.

In the information communication system, the control unit receives, from the requestor, detection conditions for detecting information and a different detection frequency applicable for at least some of the detection conditions. That is, the information communication system is characterized in that the information communication system receives a different detection frequency when detecting information. These detection conditions may include at least one of whether the detection target is moving, the moving speed of the detection target, the size of the detection target, a history of the information in the detection target, an area where the detection target is located, the position of the detection target, and the degree of confidence required for the information.

The information communication system may further include a detection unit that detects information relating to the detection target, and tasks may be divided between the detection unit and the control unit. For example, the control unit subscribes to detection by specifying the detection frequency and the detection conditions to the detection unit. The term "subscribe" here is based on the 3GPP Subscribe method (for example see TS23. 288). On the other hand, the detection unit can notify information that satisfies the detection conditions to the control unit, and the control unit can further notify the information notified from the detection unit to the requestor. The detection unit may change the detection frequency according to the detected information. The detection unit can acquire information that has been acquired or generated in a device connected to the information communication system or a device connected to another network connected to the information communication system and notify this information to the control unit.

The control unit may receive a plurality of sets of detection conditions identified by identification information, and each set of detection conditions may be associated with a selection condition, and the control unit may select a set of detection conditions that satisfies the selection condition and select information relating to the detection target. The information to be detected is dynamic information on a target relating to geographical information when the target undergoes temporal changes, and this information is effective for creating or updating a dynamic map. In the following embodiments, the detection conditions will be referred to as "sensing conditions".

In the following, an embodiment of this disclosure will be described based on the drawings. The following embodiment is merely an example shown for explanation, and this disclosure is not limited to the configuration of this embodiment. For example, an example in which this disclosure is applied to a fifth-generation mobile communication system will be described below, but this disclosure may also be applied to a mobile communication system of 4G or 5G or a later standard. This disclosure may be applied to a mobile communication system specified by an organization other than 3GPP, or may be applied to an arbitrary wireless communication system or wire communication system other than a mobile communication system. As the information used by a receiver of which one example is an external application server, sensing information that is detected, measured, or generated by an external device connected to the fifth-generation mobile communication system is named as an example. However, the information to be provided and used may be sensing information that has been measured by a device other than an external device connected to the fifth-generation mobile communication system, or may be arbitrary data other than sensing information. For example, the receiver may be provided with information that has been acquired by a constituent element called a network function (NF) inside the fifth-generation mobile communication system, and may use this information. Further, the receiver may be provided with information that has been acquired by a constituent element called an application function (AF), and may use this information.

### Configuration of Information Processing System

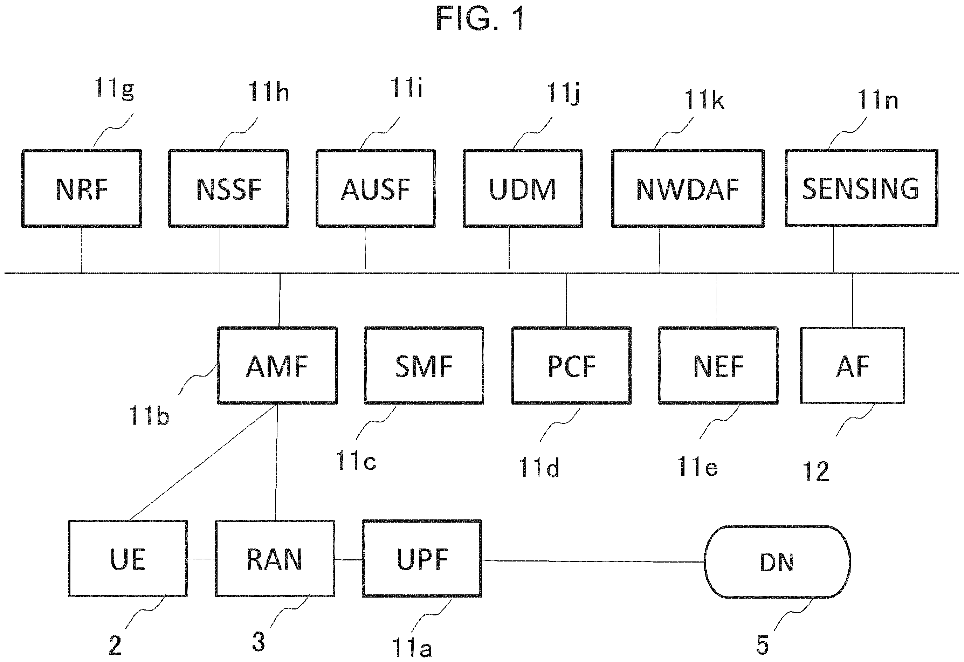

FIG. 1 shows components (constituent elements) composing the fifth-generation mobile communication system (also called a 5G network or a 5GNW). In FIG. 1, user equipment (LTE) 2 is a terminal of a user (subscriber). A radio access network (RAN) 3 is an access network to a 5G core network (5GC). The RAN 3 is formed by a base station (gNB) 3A. The 5G network has a 5G core network (5GC) and an access network ((R) AN), and the LTE 2, a DN 5, and an AF 12 are connected to the 5G network. Each of NFs 11a to 11k, 11n is a function that is realized as one or more than one computer (information processing device) executes programs. A single computer may realize more than one function among the NFs 11a to 11k. In this embodiment, the constituent elements of the 5GC are referred to as "NFs 11" as a collective name, and are individually referred to as "NEF 11e" etc. In FIG. 1, each constituent element is denoted by an individual reference sign in parentheses along with the collective reference sign.

As described above, the 5GC is composed of an aggregate of components having predetermined functions called network functions (NFs). In FIG. 1, the following functions are shown as the NF 11 composing the 5GC. In FIG. 1, they are represented by thick-line rectangles.
UPF (User Plane Function) 11a
AMF (Access and Mobility Management Function) 11b
SMF (Session Management Function) 11c
PCF (Policy Control Function) 11d
NEF (Network Exposure Function) 11e
NRF (Network Repository Function) 11g
NSSF (Network Slice Selection Function) 11h
AUSF (Authentication Server Function) 11i
UDM (Unified Data Management) 11j
NWDAF (Network Data Analytics Function) 11k

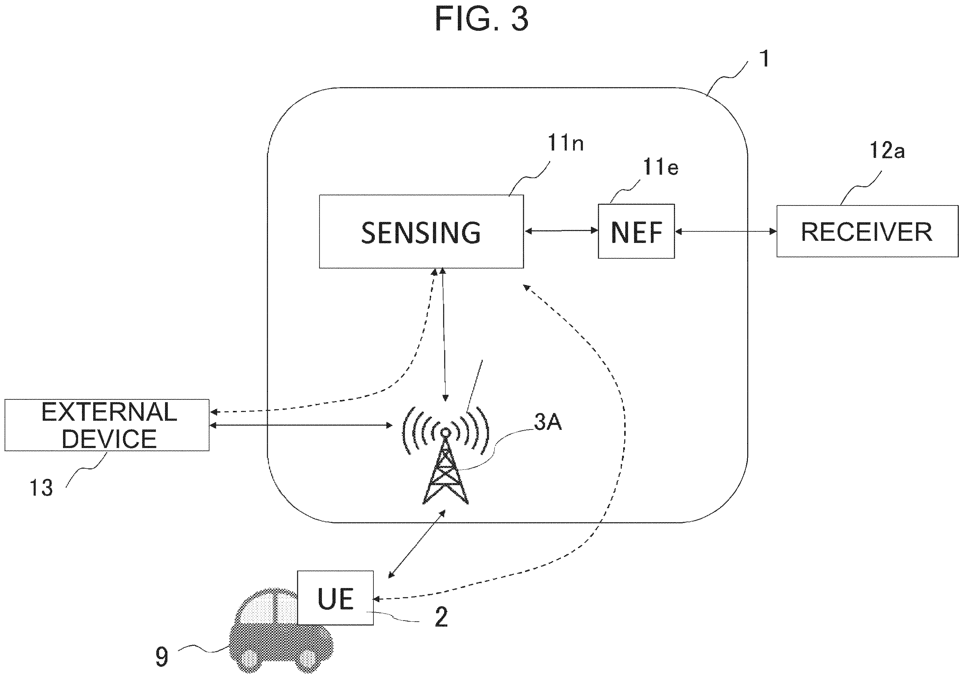

The UPF 11a performs routing and transfer of user packets (packets in a user plane transmitted and received by the UE 2), packet inspection, and a QoS process. The AMF 11b is an in-area containing device of the UE in the 5GC 1 (FIG. 3). The AMF 11b contains the RAN 3 and performs control of subscriber authentication, management of the position (mobility) of the LTE 2, etc. The UDM 11j performs provision of subscriber information, or state acquisition, registration, deletion, and changing of the UE 2.

The SMF 11c manages a protocol data unit (PDU) session, and controls the UPF 11a to execute quality of service (QoS) control and policy control. The PDU session is a virtual communication channel for exchanging data between the UE 2 and the data network (DN) 5. The DN 5 is a data network (the Internet etc.) outside the 5GC.

The PCF 11d performs QoS control, policy control, charging control etc. under control by the SMF 11c. In the QoS control, control of the quality of communication, such as prioritized transfer of a packet is performed. In the policy control, communication control, such as QoS, permission or prohibition of packet transfer, and charging, based on the network or subscriber information is performed. The NEF 11e serves to mediate communication between an application function (AF) 12 or a node outside the 5GC and an NF of the 3GPP. The AF 12 is an element that interacts with the 5GC to provide a service to a user. In this embodiment, the AF 12 requests and receives sensing information provided in the SENSING 11n. In this embodiment, therefore, the AF 12 is referred to as a sensing information receiver (hereinafter simply "receiver").

The NRF 11g stores and manages information on the NFs (e.g., the AMF, the SMF, and the UPF) inside the 5GC 1 (FIG. 3). In response to an inquiry about an NF desired to be used, the NRF 11g can reply to an inquirer with a plurality of NF candidates.

The NSSF 11h functions to select a network slice to be used by a subscriber from among network slices generated by network slicing. A network slice is a virtual network having specifications according to the purpose.

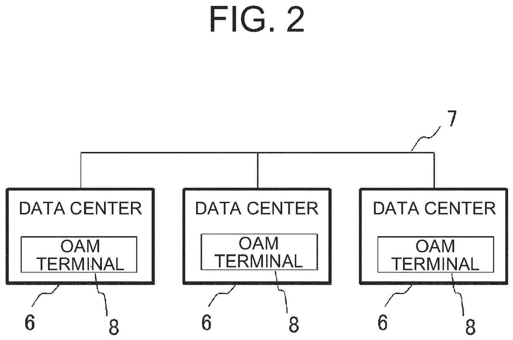

The AUSF 11i is a subscriber authentication server that performs authentication of subscribers under control by the AMF 11b. The UDM 11j holds subscriber-related information. The NWDAF 11k functions to collect data from each NF 11, an OAM terminal 8 (FIG. 2), a receiver 12a (FIG. 3), etc. and analyze the data. Thus, the NWDAF 11k is an NF that provides analytical information on a network.

The SENSING 11n executes a sensing process including collecting sensing information from the UE 2 or another external system and providing the collected sensing information to the UE 2, the AF 12, or another external system (the DN 5 etc.). Details of the SENSING 11n will be described later.

FIG. 2 is a diagram showing an example of the configuration of data centers 6 forming the 5GC. Each of the NFs forming the 5GC is composed of a single or a plurality of information processing devices (servers, network devices, etc.). The information processing device is installed in a special building called a data center. The data center is also called a station building. As shown in FIG. 2, one or more than one data center 6 (in FIG. 2, three are shown as an example) is disposed inside a communication area of the 5GC, and these data centers 6 are connected to one another by a communication line 7. Each of the data centers 6 is provided with the operations, administration, and maintenance (OAM) terminal 8. The OAM terminal 8 functions to perform operation, administration, and maintenance of the network (5GC).

A plurality of NFs of the same type is sometimes prepared in the 5GC. For example, in some cases, the NFs 11 are prepared for each data center 6. In other cases, one NF 11 is shared among the data centers 6. In still other cases, one data center 6 constitutes a plurality of NFs 11 of the same type. The number of data centers 6, the number of NFs 11, and the correspondence relationship between the NFs 11 and the data centers 6 can be appropriately set.

FIG. 3 is an explanatory diagram of an information processing system according to the embodiment. The 5GC 1 shown in FIG. 3 has the NFs 11 (11a to 11k, 11n) shown in FIG. 1. The LTE 2 can perform wireless connection to a base station 3A constituting the RAN 3 and exchange data with a communication partner (DN 5) through the 5GC 1. While the UE 2 is installed in a vehicle 9 in the example shown in FIG. 3, the UE 2 does not have to be an on-board terminal. The UE 2 may be a device called a mobile terminal or a smartphone. The vehicle 9 may be a vehicle driven by a person or may be a self-driving vehicle.

For example, the SENSING 11n receives a request for provision of sensing information from the receiver 12a through the NEF 11e and collects sensing information from a specified detection target. Then, the SENSING 11n notifies the collected sensing information through the NEF 11e to the receiver 12a from which the request for provision of sensing information has been received. The receiver 12a includes the UE 2 connected to the 5GC, a device, an information processing device, a server, etc. in another network connected to the 5GC, as well as the base station 3A and an NF 11. An NF 11 that requests sensing information can also be called a requester NF 11 or the NF 11 as the receiver 12a.

In the following embodiment, processing will be described using the external device 13 as an example of the detection target. In this embodiment, therefore, the external device 13 may include the LTE 2 connected to the 5GC, and a device, an information processing device, a server, etc. in another network connected to the 5GC. The external device 13 may include an NF 11 other than the aforementioned requestor NF 11. The external device 13 monitors the detection target by means of a sensor or the like under sensing conditions (also called detection conditions) specified by the SENSING 11n, acquires information from detection target, and reports (notifies or responds) to the SENSING 11n.

The information that the external device 13 monitors and acquires in this embodiment can be said to be dynamic information on a target relating to geographical information when the target undergoes temporal changes. In the case where the receiver 12a receives a notification of dynamic information from the information communication system, the receiver 12a can efficiently create a dynamic map. A dynamic map is defined as a map showing high-accuracy information on three-dimensional geographical space (foundational map information) that allows the position of one's own vehicle relative to roads and their surroundings to be located at a lane level, with various pieces of additional map information for supporting autonomous driving etc. (e.g., information on traffic regulations including static information, such as speed limits, as well as dynamic information, such as information on accidents and construction works) shown over that information (Roadmap for Public and Private ITS Framework 2016, the Strategic Headquarters for the Promotion of an Advanced Information and Telecommunications Network Society, May 20, 2016, https://www8.cao.go.jp/cstp/gaiyo/sip/iinkai/jidousoukou_23/sanko3.pdf, searched May 13, 2023). It is not that the processing by the receiver 12a in this embodiment is limited to updating a dynamic map.

The detection target that the external device 13 monitors and the sensor that the external device 13 uses for monitoring are not limited. The sensor is, for example, a sensor that detects images including moving images and still images, sounds including voices, temperature, humidity, wind speed, an amount of rainfall, pressure, mass, or a physical quantity detected in a vehicle. A sensor that detects images is a camera or the like, and acquires images from a predetermined region, environment (roads and rivers), an object, etc. The camera or the like can be installed in a mobile body (a vehicle, ship, airplane, or artificial satellite) and acquire images while moving. Normally, images acquired by the external device 13 can be said to be dynamic information when the target undergoes temporal changes.

A sensor that acquires sounds is a microphone, and collects sounds from an environment where it is installed or surroundings where the mobile body in which the microphone is installed is present. A sensor that detects temperature, humidity, wind speed, an amount of rainfall, pressure, mass, etc. is a measurement device that measures that physical quantity. Examples of physical quantities detected in a vehicle include a moving speed, an acceleration, an angular speed, a moving direction, an acceleration direction, a rotation direction, a rotation speed of a prime mover, a fuel or battery level, voltage and current values of a power circuit, a resistance value, and a point where the mobile body is currently located. Sounds and other physical quantities acquired by the external device 13 can be said to be dynamic information when the target undergoes temporal changes.

However, the sensor may be simply a control unit of a computer itself. For example, the sensing information acquired by a control unit of a computer as the sensor includes a value calculated by a computer of which one example is a simulator, a parameter set for a manufacturing device in a manufacturing process, sales of a shop during a predetermined period, inventory thereof, a number of each commodity thereof sold during a predetermined period, and a number of users and sales of a provided service during a predetermined period. These pieces of sensing information can be said to be dynamic information when the target undergoes temporal changes.

A sensing service by the SENSING 11n can be performed based on either the Subscribe/Notify method or the Request/Response method (the same as the provisions of Chapter 6.1 of TS23.288, the provisions of Chapter 4.15.3 of TS23.502, etc.)

### Configurations of Information Processing Device and Terminal

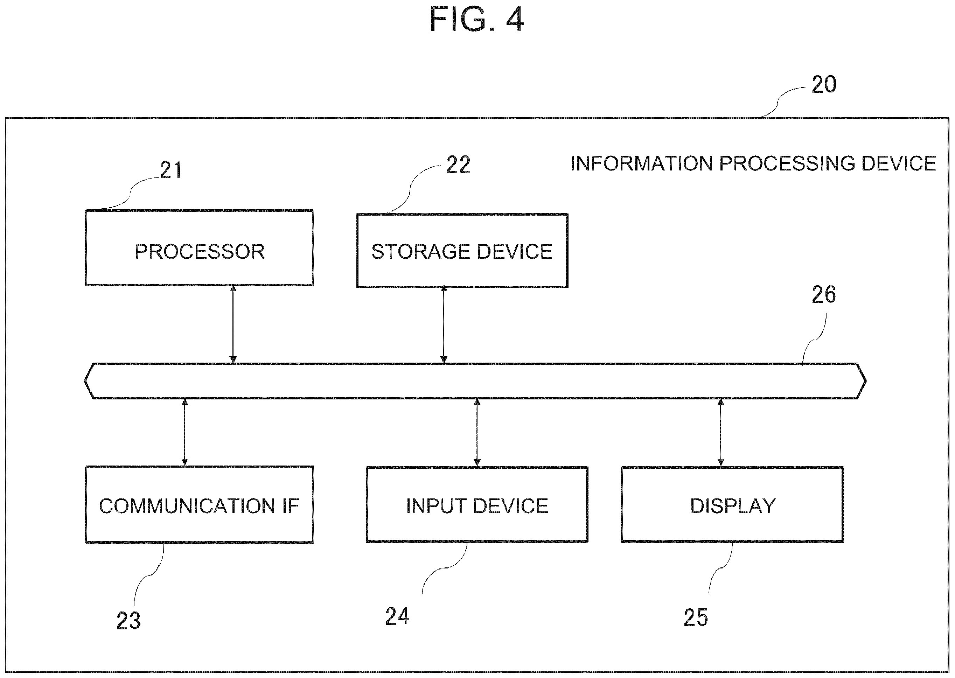

FIG. 4 is a diagram showing an example of the configuration of an information processing device 20 that can operate as each of the NFs 11a to 11k, 11n, the OAM terminal 8, and the receiver 12a. In FIG. 4, the information processing device 20 can be configured using a personal computer (PC), a work station (WS), or a special-purpose or general-purpose information processing device (computer) such as a server machine. The information processing device 20 may be an aggregate (cloud) of one or more than one computer.

The information processing device 20 includes a processor 21 as a processing unit or a control unit (controller), a storage device 22, a communication interface 23 (communication IF 23), an input device 24, and a display 25 that are connected to one another through a bus 26.

The storage device 22 includes a main storage device and an auxiliary storage device. The main storage device is used as at least one of a storage area for programs and data, a decompression area for programs, a work area for programs, a buffer area for communication data, etc. The main storage device is formed by a random-access memory (RAM) or a combination of an RAM and a read-only memory (ROM). The auxiliary storage device is used as a storage area for data and programs. As the auxiliary storage device, a non-volatile storage medium is used. Examples of non-volatile storage media include a hard disc, a solid-state drive (SSD), a flash memory, and an electrically erasable programmable read-only memory (EEPROM). The storage device 22 can include a drive device for a disc recording medium.

The communication IF 23 is a circuit that performs communication processing. For example, the communication IF 23 is a network interface card (NIC). The communication IF 23 may be a wireless communication circuit that performs wireless communication (5G, wireless LAN (Wi-Fi (R)), BLE, etc.). The communication IF 23 may be a combination of a circuit that performs wire communication processing and a wireless communication circuit.

The input device 24 includes keys, buttons, a pointing device, a touch panel, etc. and is used to input information. The display 25 is, for example, a liquid crystal display and displays information and data.

The processor 21 performs various processes by executing various programs stored in the storage device 22. As the processor 21 executes programs stored in the storage device 22, the information processing device 20 can operate as each of the NFs 11a to 11k, 11n, the OAM terminal 8, and the receiver 12a.

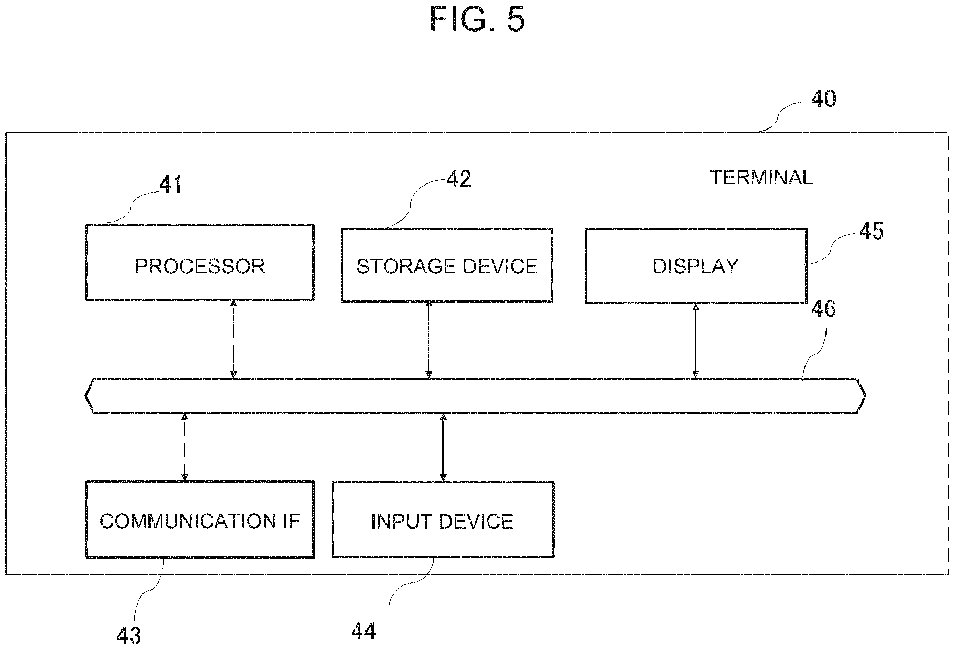

FIG. 5 is a diagram showing an example of the configuration of a terminal 40 that can operate as the UE 2. The terminal 40 includes a processor 41, a storage device 42, a communication interface 43 (communication IF 43), an input device 44, and a display 45 that are connected to one another through a bus 46. As the processor 41, the storage device 42, the communication IF 43, the input device 44, and the display 45, the same ones as the processor 21, the storage device 22, the communication IF 23, the input device 24, and the display 25 can be used. Therefore, description of these components will be omitted.

The processors 21 and 41 are, for example, central processing units (CPUs). The CPU is also called a microprocessor unit (MPU). The processors 21 and 41 may have a single processor configuration or a multiprocessor configuration. A single physical CPU connected by a single socket may have a multi-core configuration. The processors 21 and 41 may include an arithmetic operation device of various circuit configurations, such as a digital signal processor (DSP) or a graphics processing unit (GPU). The processors 21 and 41 may have a configuration that cooperates with at least one of an integrated circuit (IC), another digital circuit, and an analog circuit. Integrated circuits include an LSI, an application-specific integrated circuit (ASIC), and a programmable logic device (PLD). PLDs include, for example, a field-programmable gate array (FPGA). Examples of the processors 21 and 41 include a microcontroller (MCU), a system-on-a-chip (SoC), a system LSI, and a device called a chip set.

### Example of Processing

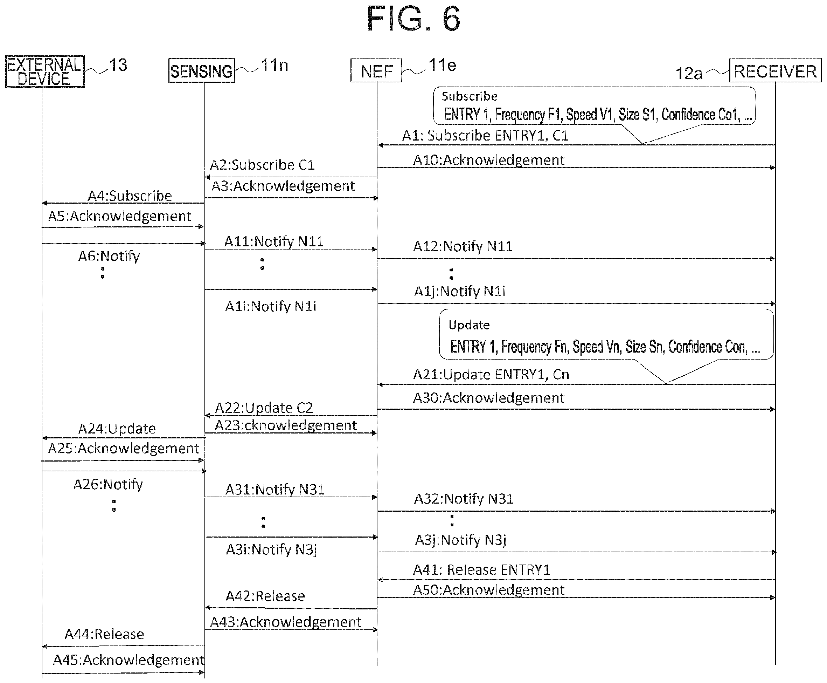

FIG. 6 is a sequence chart showing an example of processing of sensing information in the information communication system. In FIG. 6, processing by the receiver 12a that is a requestor of sensing information and processing by the external device 13 that is a collection source of sensing information are also shown. FIG. 6 shows an example of processing based on the (3GPP) Subscribe/Notify method. It is not that processing of sensing information in the information communication system is limited to processing based on the Subscribe/Notify method. Processing of sensing information in the information communication system may be provided based on the Request/Response method.

In this processing, first, the receiver 12a requests notification of sensing information from the NEF 11e through a Subscribe message (arrow A1). The Subscribe message is a message that requests notification of sensing by Notify. In the Subscribe message, an entry (e.g., ENTRY1) and conditions (e.g., C1) are specified. The receiver 12a can request a sensing service from the NEF 11e by specifying different conditions. The entry (e.g., ENTRY1) is information for identifying the conditions (e.g., C1) that the receiver 12a specifies to the NEF 11e. Thus, the receiver 12a can request a sensing service from the NEF 1 1e through a Subscribe message including different conditions by specifying a different entry. The NEF 11e stores the conditions specified through the Subscribe message in association with the entry.

Thus, in the example of arrow A1, the Subscribe message includes the entry ENTRY1 and the conditions C1 illustrated as "Subscribe, ENTRY1, C1." The conditions C1 include, for example, conditions relating to a detection target, and conditions relating to a sensing interval, a sensing time, sensing accuracy, etc.

For example, in the example of the arrow A1, the Subscribe message is "Subscribe ENTRY1, Frequency F1, Speed V1, Size S1, Confidence Co1, ..." Here, as the conditions to be identified by ENTRY1, the sensing frequency F1, the speed V1 of the detection target, the size S1 of the detection target, the confidence (degree of confidence) Co1, etc. are specified. The sensing frequency F1 is a time interval at which the SENSING 11n acquires sensing information from the external device 13. Of the parameters specified through the Subscribe message, the parameters other than the frequency F1 are used to determine whether the sensing information acquired from the detection target suffices. Therefore, the parameters other than the frequency F1 are also called sensing conditions (or detection conditions). The detection frequency is set according to the sensing conditions.

The speed V1 is a moving speed of the target to be sensed through the external device 13. The size S1 of the detection target is the size of the target to be sensed through the external device 13. Such condition parameters that specify the attributes of the sensing target may be specified as values within predetermined ranges. The predetermined range may be specified, for example, from a minimum value to a maximum value. Examples are a speed of V1 to V2 and a size of S1 to S2. Condition parameters that specify the attributes may be specified as a certain value and allowable values of a deviation from that value. For example, the speed may be specified as V1±10%. Condition parameters that specify the attributes of the target are not limited to the speed and the size, and other examples include the color, the shape, and the type of the target. The type of the target refers to a person, a moving body, a vehicle, a shop, etc.

"Confidence (degree of confidence) Co1" specifies that the degree of confidence or accuracy with which the SENSING 11n determines whether the sensing information acquired from the external device 13 satisfies the conditions (e.g., C1) specified in the Subscribe message be Co1. That is, the confidence (degree of confidence) is a ratio at which the SENSING 11n determines correctly when determining that the sensing information relating to the detection target reported from the external device 13 satisfies the conditions specified at the time of the request for sensing information.

Upon receiving the Subscribe message, the NEF 11e stores the conditions (e.g., C1) in the specified entry (e.g., ENTRY1). The NEF 11e returns an Acknowledgement message to the receiver 12a (arrow A10). The NEF 11e further requests sensing information from the SENSING 11n through a Subscribe message specifying the conditions C1 (arrow A2). In response, the SENSING 11n returns an Acknowledgement message to the NEF 11e (arrow A3).

Further, the SENSING 11n makes a request to the external device 13 for sensing in accordance with the conditions C1 (arrow A4). For example, the SENSING 11n requests the external device 13 to acquire information with the frequency F1 specified by the conditions C1 in the Subscribe message from the NEF 11e. More specifically, when the external device 13 is a camera, the SENSING 11n requests the camera to capture an image with the frequency F1 and notify the captured image to the SENSING 11n.

One example of the frequency F1 is the number of times information is acquired per unit time. The frequency F1 may instead be an interval, i.e., a time that has elapsed since information has been acquired last time. As will be appreciated, this is still frequency but represented in units of time between occurrences. In this case, the interval can also be said to be a parameter for controlling the external device 13 such that a lapse of time since information has been newly detected last time becomes shorter than a predetermined time. Therefore, the frequency F1 can also be said to be one example of the history of acquisition of information.

In the example of FIG. 6, the SENSING 11n requests the external device 13 to acquire information through a Subscribe message (arrow A4), and the external device 13 returns an Acknowledgement message to the SENSING 11n (arrow A5). The external device 13 notifies the acquired information (e.g., an image) through a Notify message with the frequency F1 (arrow A6). This notification through a Notify message is repeated until the SENSING 11n sends a Release message to the external device 13 (arrow A44) and the external device 13 returns an Acknowledgement message to the SENSING 11n (arrow A45). In some cases, this notification through a Notify message is changed through an Update message for updating the sensing conditions C1 from the SENSING 11n to the external device 13.

In the case where the processing of sensing information by the SENSING 11n is provided based on the Request/Response method, the frequency F1 etc. can be controlled by the SENSING 11n. That is, the SENSING 11n can send a Request message for sensing to the external device 13 at time intervals corresponding to the frequency F1 and receive sensing information corresponding to the Request message through a Response message. The SENSING 11n can continue sending a Request message for sensing to the external device 13 with the frequency F1 until the SENSING 11n receives a Release message from the NEF 11e (arrow A42) and the external device 13 returns an Acknowledgement message to the NEF 11e (arrow A43).

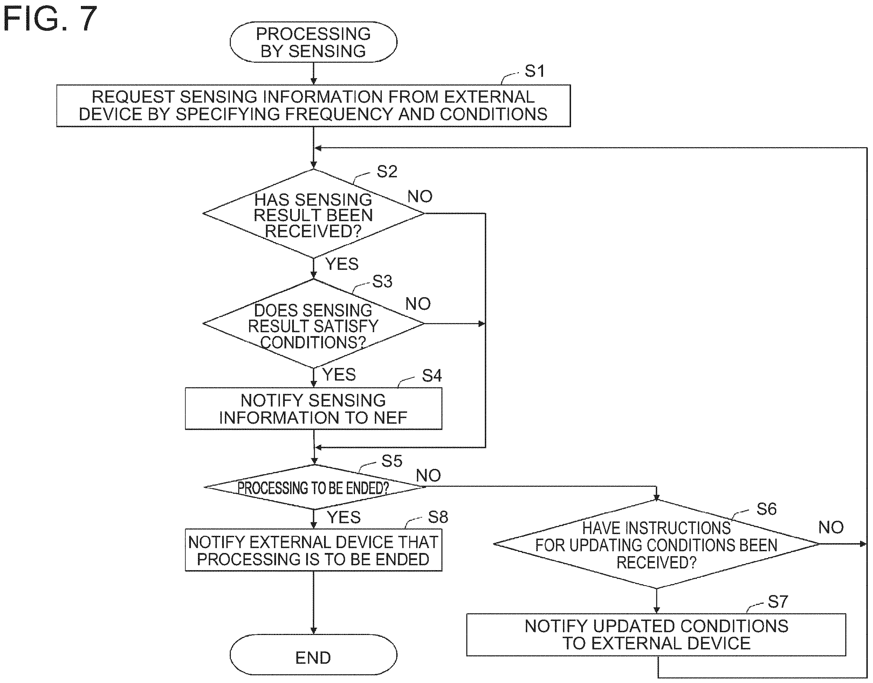

When the SENSING 11n receives information (e.g., an image) acquired by the external device 13 through a Notify message, the SENSING 11n determines whether the acquired information satisfies the conditions C1. Details of this determination will be separately described using FIG. 7. The SENSING 11n notifies information (N11) that satisfies the conditions C1 among the pieces of information notified from the external device 13 to the NEF 11e through a Notify message (arrow A11). Then, the NEF 11e notifies the information (N11) notified from the SENSING 11n to the receiver 12a through a Notify message (arrow A12).

By such processing, the receiver 12a can make the external device 13 detect information satisfying the conditions C1 with the specified frequency F1 and can thereby acquire information applicable to the conditions C1. Information applicable to the conditions C1 is, for example, an image of the detection target that is moving at the speed V1 (±10%), has the size S1 (±10%), and has been identified with the degree of confidence Co1. Acquisition of information (N1i) and notification to the SENSING 11n (arrow A1i) that are performed by the external device 13, and determination of whether the conditions C1 are satisfied and notification of the information (N1i) satisfying the conditions C1 to the receiver 12a (arrow A1j) that are performed by the SENSING 11n as has been described above are repeated a plurality of times.

Next, one example of updating of conditions by the receiver 12a will be shown. Through the NEF 11e, the receiver 12a can request the SENSING 11n to acquire information with a different frequency and notify information satisfying other conditions Cn etc. according to the circumstances. In this case, the receiver 12a may make a request to the NEF 11e for a sensing service by an entry ENTRY2 different from that in the Subscribe message of the arrow A1, through a Subscribe message that specifies different conditions Cn. Alternatively, the receiver 12a may request the NEF 11e, through an Update message, to update the conditions C1 to Cn in the same entry ENTRY1 as that in the Subscribe message of the arrow A1. One example of processing by which the frequency F1 is updated to a frequency Fn and the conditions C1 are updated to the condition Cn through an Update message after an arrow A21 of FIG. 6 will be shown.

In this processing, the receiver 12a requests the NEF 11e to update the sensing conditions through an Update message (arrow A21). In the Update message, as in a Subscribe message, an entry (e.g., ENTRY1) and conditions (e.g., Cn) are specified. By specifying different conditions in the entry being used through an Update message, the receiver 12a can request the NEF 11e to update the sensing conditions. As already described, the entry is information for identifying the conditions specified by the receiver 12a to the NEF 11e.

In the example of the arrow A21, the Update message includes the entry ENTRY1 and the conditions Cn illustrated as "Update, ENTRY1, Cn." That is, the receiver 12a requests the NEF 11e to change the conditions corresponding to ENTRY1 to Cn.

Upon receiving the Update message, the NEF 11e stores the conditions (e.g., Cn) to which updating has been requested in the specified entry (e.g., ENTRY1). In the example of FIG. 6, the conditions Cn are the frequency Fn, a speed Vn, a size Sn, Confidence Con,... The NEF 11e returns an Acknowledgement message to the receiver 12a (arrow A30).

Then, the NEF 11e further requests the SENSING 11n to update the sensing conditions from C1 to Cn through an Update message specifying the conditions Cn (arrow A22). The SENSING 11n returns an Acknowledgement message to the NEF 11e (arrow A23).

Further, the SENSING 11n makes a request to the external device 13 for sensing in accordance with the condition Cn (arrow A24). For example, the SENSING 11n requests the external device 13 to acquire information with the frequency Fn specified by the conditions Cn in the Subscribe message form the NEF 11e. More specifically, when the external device 13 is a camera, the SENSING 11n requests the camera to capture an image with the frequency Fn and notify the captured image to the SENSING 11n.

Then, the external device 13 returns an Acknowledgement message to the SENSING 11n (arrow A25). The external device 13 notifies acquired information (e.g., an image) through a Notify message with the frequency Fn (arrow A26). This notification through a Notify message is repeated until the SENSING 11n sends a Release message to the external device 13 (arrow A44) and the external device 13 returns an Acknowledgement message to the SENSING 11n (arrow A45).

When the SENSING 11n receives the information (e.g., the image) acquired by the external device 13 through a Notify message, the SENSING 11n determines whether the acquired information satisfies the conditions Cn. The SENSING 11n notifies information (N31) that satisfies the conditions Cn among the pieces of information notified from the external device 13 to the NEF 11e through a Notify message (arrow A31). Then, the NEF 11e notifies the information (N31) notified from the SENSING 11n to the receiver 12a through a Notify message (arrow A32). By such processing, the receiver 12a can make the external device 13 detect information that satisfies the conditions Cn with the specified frequency Fn and can thereby acquire information applicable to the conditions Cn. Information applicable to the conditions Cn is, for example, an image of the target that is moving at the speed Vn (±10%), has the size Sn (±10%), and has been identified with the degree of confidence Con.

When it becomes unnecessary to acquire information by the external device 13 and notify information by the SENSING 11n, the receiver 12a transmits a Release message to the NEF 11e (arrow A41). Then, the NEF 11e returns an Acknowledgement message to the receiver 12a (arrow A50). Further, the NEF 11e transmits a Release message to the SENSING 11n (arrow A42). Then, the SENSING 11n returns an Acknowledgement message to the NEF 11e (arrow A43). Further, the SENSING 11n transmits a Release message to the external device 13 (arrow A44). Then, the external device 13 returns an Acknowledgement message to the SENSING 11n (arrow A45). In this way, pieces of information are sent and received among the receiver 12a, the NEF 11e, the SENSING 11n, and the external device 13 through each message of Subscribe/Acknowledgement, Notify, Update/Acknowledgement, and Release/Acknowledgement.

FIG. 7 is a flowchart showing an example of processing by which the SENSING 11n notifies information satisfying sensing conditions to the NEF 11e. In this processing, the SENSING 11n requests sensing information from the external device 13 by specifying the frequency and the conditions (S 1). The request for sensing information is based on, for example, the Subscribe/Notify method. The sensing service may instead be based on, for example, the Request/Response method. In the following, in FIG. 7, an example of processing based on the Subscribe/Notify method will be described. Examples of parameters specified by a Subscribe message in the Subscribe/Notify method have already been shown in FIG. 6. Here, it is assumed that the frequency F1 and the conditions C1 have been specified.

Then, the SENSING 11n determines whether sensing information has been notified from the external device 13 through a Notify message (S2). When the determination in S2 found that information has not been notified from the external device 13, the SENSING 11n moves the processing to S5. On the other hand, when the determination in S2 found that sensing information has been notified from the external device 13, the SENSING 11n determines whether the notified sensing information satisfies the conditions C1 (S3).

The method of determination in S3 is not limited. For example, in the case where sensing information is an image and the conditions C1 specify that the image include a certain target, the determination in S3 may be executed by an artificial intelligence (AI) system, such as deep learning. The AI system can include a learned model that has undergone machine learning of still images, moving images, etc. including a large number of the certain targets. The learned model can determine whether sensing information (a still image or a moving image) notified from the external device 13 includes the learned target that meets the conditions C1. Among the conditions C1, the confidence may be set from the degree of learning that the learned model has undergone.

When the determination in S3 found that the notified sensing information satisfies the conditions C1, the SENSING 11n notifies the sensing information to the NEF 11e (S4). Then, the SENSING 11n determines whether to end the processing (S5). A case where the processing is to be ended is a case where the SENSING 11n has received a Release message from the NEF 11e.

When the determination in S5 found that the SENSING 11n is not to end the processing, the SENSING 11n determines whether instructions for updating the conditions have been received from the NEF 11e (S6). Here, the conditions are the same as those described in FIG. 6 and include the frequency. When the determination in S6 found that the SENSING 11n has received instructions for updating the conditions within a predetermined period, the SENSING 11n notifies the updated conditions (including the frequency) to the external device (S7). Then, the SENSING 11n returns the processing to S2. When the determination in S6 found that the SENSING 11n has not received instructions for updating the conditions within the predetermined period, the SENSING 11n directly returns the processing to S2.

When the determination in S5 found that the SENSING 11n is to end the processing, the SENSING 11n notifies the external device 13 that the processing is to be ended (Release). Then, the SENSING 11n ends the processing after receiving an acknowledgement from the external device 13.

As described above, according to this embodiment, the NEF 11e as a control unit receives conditions including the frequency at which the control unit should respond with information from the receiver 12a, and responds with information detected by the SENSING 11n based on the received frequency. More specifically, the NEF 11e requests the SENSING 11n to acquire information with the received frequency and notify information that satisfies conditions C specified as the sensing conditions. The SENSING 11n as a control unit acquires information from the external device 13, determines whether the acquired information satisfies the conditions C, and notifies information that satisfies the conditions C to the NEF 11e. The NEF 11e notifies the information notified from the SENSING 11n to the receiver 12a. Thus, in this information communication system, the NEF 11e and the SENSING 11n as control units can notify information satisfying the conditions specified by the receiver 12a to the receiver 12a at a desirable timing.

Further, according to this embodiment, the NEF 11e as a control unit receives conditions including a different frequency from the receiver 12a and requests the SENSING 11n to notify information. At least one of the NEF 11e and the SENSING 11n as a control unit holds conditions including the frequency in association with an applicable entry (ENTRY1 etc.), so that the SENSING 11n can acquire information that satisfies desired conditions from the external device 13 with the specified frequency, and can notify the acquired information to the receiver 12a through the NEF 11e. Thus, the receiver 12a can efficiently acquire desired information at an appropriate timing by accessing this information communication system. That is, in this information communication system, the frequency with which the external device 13 acquires information is adjusted, which, for example, increases the possibility of saving the communication resources required for transmitting sensing information.

The conditions C as the sensing conditions may include at least one of whether the detection target is moving, the moving speed of the detection target, the size of the detection target, the history of the information in the detection target (a lapse of time since information has been newly detected is shorter than a predetermined time), and the degree of confidence required for the information. Thus, by specifying various attributes of the detection target, this information communication system can narrow down the detection target and acquire information relating to the detection target. In the case where the detection target is not moving, the moving speed is zero, and in the case where the detection target is moving, the moving speed is a value different from zero. Therefore, whether the detection target is moving can be included in the moving speed.

This information communication system further includes the SENSING 11n as a detection unit that detects information relating to the detection target. The NEF 11e as a control unit specifies conditions C including the frequency to the SENSING 11n and subscribes to detection by the SENSING 11n. The SENSING 11n notifies information that satisfies the conditions C1 to the NEF 11e. The NEF 11e further notifies the information notified from the SENSING 11n to the receiver 12a that is the requestor. Thus, this information communication system can appropriately and efficiently process information through cooperation between the NEF 11e serving as an interface with the receiver 12a that is the information requestor and the external device 13 that is a source of acquiring information. Therefore, in the case where the receiver 12a executes a process such as creating and updating a dynamic map, this information communication system can provide the receiver 12a with information at a reasonable cost.

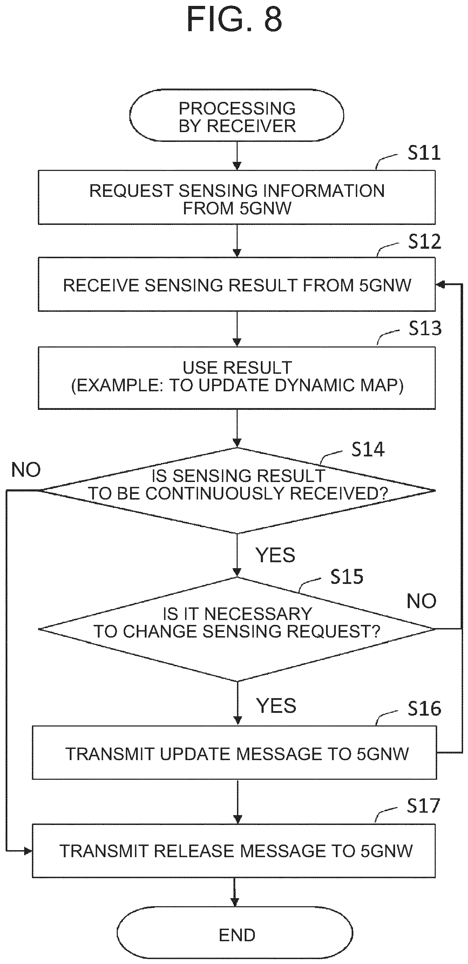

An information communication system according to a second embodiment will be described with reference to FIG. 8. In the above-described first embodiment, one example of the information communication system has been shown that receives conditions including the frequency at which the a response with information from the receiver 12a should be sent and responds with information based on the received frequency. As the information communication system according to the above-described first embodiment, one example of the information communication system has been shown that receives conditions including a different frequency from the receiver 12a and responds with information satisfying the conditions with the specified frequency. In this embodiment, one example of processing by the information communication system including the receiver 12a will be shown. In this embodiment, the receiver 12a updates a dynamic map, for example.

FIG. 8 is a flowchart showing one example of processing by the receiver 12a. The receiver 12a requests the 5GNW, for example, the NEF 11e (the same applies hereinafter) to acquire sensing information (S 11). The request for acquiring sensing information may be made based on either of the Subscribe/Notify method and the Request/Response method. The receiver 12a receives a sensing result from the NEF 11e (S12). The receiver 12a uses the received information. For example, the receiver 12a updates a dynamic MAP based on the received information (S13).

Next, the receiver 12a determines whether to continuously receive the sensing result (S14). A case where the sensing result is to be continuously received is a case where a processing period set by an operator etc. has not yet elapsed. When the receiver 12a is to continuously receive the sensing result, the receiver 12a determines whether it is necessary to change the sensing conditions including the frequency of acquiring sensing information (S15). Whether it is necessary to change the sensing conditions can be rephrased as whether it is necessary to change the sensing request. These conditions can be set by, for example, an operator of the receiver 12a.

When it is necessary to change the sensing conditions, the receiver 12a transmits an Update message to the 5GNW (S16). Then, the receiver 12a returns the processing to S12. On the other hand, when it is not necessary to change the sensing conditions, the receiver 12a directly returns the processing to S12.

When the determination in S14 found that the receiver 12a is not to continuously receive the sensing result, the receiver 12a transmits a Release message to the 5GNW (S17).

As has been described above, according to this embodiment, when the receiver 12a is to continuously receive the sensing result, the receiver 12a can determine whether it is necessary to change the sensing conditions and thereby set sensing conditions including a desirable frequency to the 5GNW. Thus, the information communication system including the receiver 12a can acquire sensing information with a desirable frequency under desirable sensing conditions.

The receiver 12a can change the sensing frequency according to, for example, the time of day, the level of confidence (degree of confidence) of the sensing result, or the speed of the detection target. For example, when the detection target is a fixed object, such as a building, the frequency is set to be lower than a predetermined frequency. For a fixed object that has newly emerged, for example, an obstacle or a traffic sign, the update frequency can be set to be higher than that for a normal fixed object.

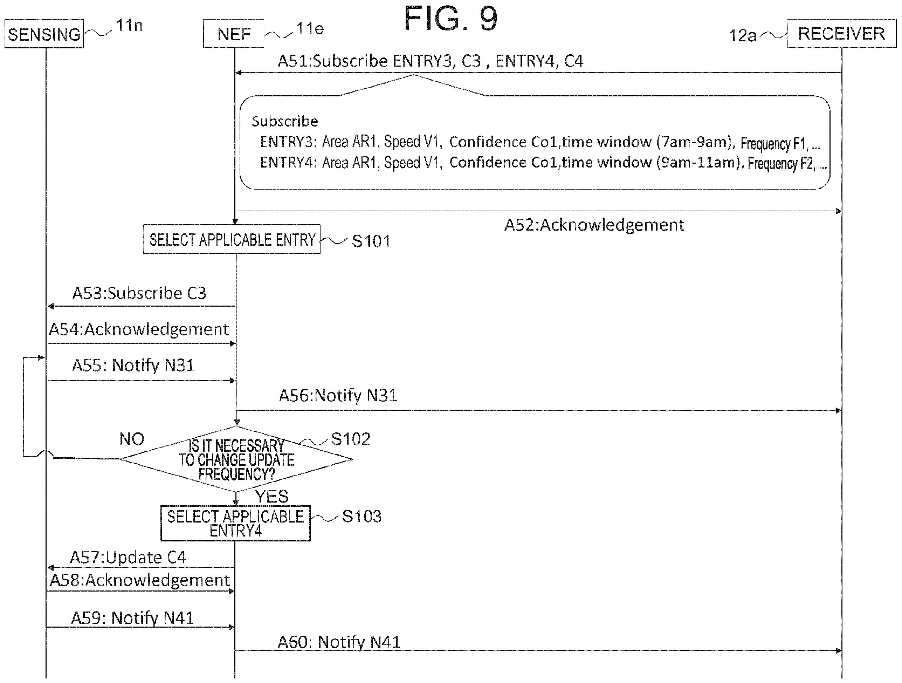

In the following, an information communication system according to a third embodiment will be described with reference to FIG. 9. In the above-described second embodiment, the information communication system including the receiver 12a determines whether it is necessary to change the sensing conditions including the sensing frequency, sets the sensing conditions to the 5GNW, and acquires sensing information. In this embodiment, an information communication system will be described in which the NEF 11e or the SENSING 11n as a control unit of the information communication system can set the frequency of acquiring sensing information and the sensing conditions.

FIG. 9 is a chart showing one example of processing by the NEF 11e and the SENSING 11n as control units of the information communication system of this embodiment. While processing by the external device 13 is omitted from FIG. 9, the external device 13 operates in the same manner as in FIG. 6. In this processing, first, the receiver 12a requests a notification of sensing information from the NEF 11e through a Subscribe message (arrow A51). The NEF 11e returns an Acknowledgement message to the receiver 12a (arrow A52).

The information communication system of this embodiment is characterized in that the receiver 12a can specify a plurality of entries to the NEF 11e. For example, the receiver 12a can specify conditions C3 for ENTRY3 and conditions C4 for ENTRY4, like "Subscribe ENTRY3, C3, ENTRY4, C4."

Here, the conditions C3 specified for ENTRY3 are an area AR1, a speed V1, Confidence Co1, a time window (7 am to 9 am), a frequency F1, ... The conditions C3 specify, for example, that information on a detection target moving at the speed V1 in the geographic area AR1 be acquired with the degree of confidence Co1. Thus, the area AR1 specifies the area where the detection target is located. Further, the conditions C3 specify the time window (7 am to 9 am), i.e., that information on the detection target be acquired with the frequency F1 between 7 am to 9 am. Here, specification of the area AR1, i.e., specification of the area AR1 to be sensed is one example of the geographical information. When the detection target changes with time, information on the detection target that satisfies the conditions C3 can be said to be dynamic information on the target relating to geographical information when the target undergoes temporal changes. Here, the time window (7 am to 9 am) is one example of the selection condition, as it specifies the condition as to whether the conditions C3 that are sensing conditions are to be selected.

The conditions C4 specified for ENTRY4 are the area AR1, the speed V1, the Confidence Co1, a time window (9 am to 11 am), a frequency F2, ... The conditions C4 specify that, for example, information on the detection target moving at the speed V1 in the geographical area AR1 be acquired with the degree of confidence Co1. Further, the conditions C4 specify the time window (9 am to 11 am), i.e., that information on the detection target be acquired with the frequency F2 between 9 am and 11 am. In the conditions C3, C4, the position of the detection target may be specified instead of the area AR1. The position is specified as, for example, ranges of the latitude and the longitude, and is roughly synonymous with the area. Here, the time window (9 am to 11 am) is also one example of the selection condition, as it specifies a condition as to whether the conditions C4 that are sensing conditions are to be selected.

Next, the NEF 11e selects an applicable entry (S101). In this embodiment, the NEF 11e acquires the current time and determines whether the time window is satisfied. When the current time satisfies the time window (7 am to 9 am), the NEF 11e selects the ENTRY3. The NEF 11e specifies the conditions C3 and transmits a Subscribe message to the SENSING 11n (arrow A53). Then, the SENSING 11n returns an Acknowledgement message to the NEF 11e (arrow A54). The SENSING 11n receives a notification of information (N31) from the external device 13 with the frequency F1, and notifies the information (N31) satisfying the conditions C3 to the NEF 11e (arrow A55). Further, the NEF 11e notifies the information satisfying the conditions C3 to the receiver 12a (arrow A56).

The NEF 11e determines whether it is necessary to change the update frequency (S102). For example, in the example of FIG. 9, the NEF 11e determines whether the current time satisfies the condition of the time window (7 am to 9 am). When the current time satisfies the condition of the time window (7 am to 9 am), the NEF 11e continues sensing under the conditions C3. That is, notification by the arrows A55, A56 is repeated until the condition of the time window (7 am to 9 am) ceases to be satisfied.

On the other hand, when the current time does not satisfy the condition of the time window (7 am to 9 am), the NEF 11e determines whether the current time satisfies the time window (9 am to 11 am) in the conditions C4. When the current time satisfies the condition of the time window (9 am to 11 am), the NEF 11e selects the ENTRY4 (S103), and transmits an Update message to the SENSING 11n such that sensing is performed under the conditions C4 (arrow A57). The SENSING 11n returns an Acknowledgement message to the NEF 11e (arrow A58).

In this way, in the time window (9 am to 11 am), the sensing conditions are updated to the conditions C4 of the ENTRY4 and sensing is conducted. The SENSING 11n receives a notification of information (N41) from the external device 13 with the frequency F2, and notifies the information (N41) satisfying the conditions C4 to the NEF 11e (arrow A59). Further, the NEF 11e notifies the information (N41) satisfying the conditions C4 to the receiver 12a (arrow A60). In this way, notification by the arrows A59, A60 is repeated until the condition of the time window (9 am to 11 am) ceases to be satisfied.

The specification of the time window is not limited to 7 am to 9 am and 9 am to 11 am, and other time windows can also be specified. The NEF 11e can select the sensing conditions of an applicable entry based on the current time and the specified time window and transmit a Subscribe message or an Update message to the SENSING 11n.

The processing by the NEF 11e in this embodiment is not limited to switching of the entry based on the time window. The receiver 12a can specify various selection conditions for the entry. For example, the NEF 11e may specify the selection condition according to the morning or the afternoon of the day, the day of week, the date, or the season. A plurality of selection conditions for the entry may be specified. The plurality of selection conditions specified for the entry may be combined by a logical OR or a logical AND.

For example, the Subscribe message of the arrow A51 in FIG. 9 may be generalized as follows.

### (Expression 1)

Subscribe
ENTRY1: element condition D11, element condition D12, ..., element condition D1N, (Logical Expression R1)
   selection condition T11, selection condition T12, ..., selection condition T1M, (Logical Expression R2),
   frequency F1,
ENTRY2: element condition D21, element condition D22, ..., element condition D2N, (Logical Expression R1)
   selection condition T21, selection condition T22, ..., selection condition T2M, (Logical Expression R2),
   frequency F2,
      ...)

Here, "element condition D11, element condition D12, ..., element condition D1N" are conditions relating to the detection target, and, for example, the speed, the size of the detection target, and the area to be sensed are specified. Similarly, "element condition D21, element condition D22, ..., element condition D2N" are conditions relating to the detection target. Logical Expression R1 is a logical expression that combines a plurality of element conditions. The logical expression combines each of the element conditions "element condition D11, element condition D12, ..., element condition D1N," and conditions defined by the combined logical expressions are specified as the sensing conditions. The frequency F1 is the frequency specified in the entry.

"Selection condition T11, selection condition T12, ..., selection condition T1M" are conditions that specify whether the entry is to be applied to sensing. Similarly, "selection condition T21, selection condition T22, ..., selection condition T2M" are conditions that specify whether the entry is to be applied to sensing. Logical Expression R2 is a logical expression that combines a plurality of selection conditions. The logical expression combines each of the selection conditions "selection condition T11, selection condition T12, ..., selection condition T1M," and when a logic defined by the combined logical expression is true, the conditions of the entry are specified as the sensing conditions. The frequency F2 is the frequency specified in the entry.

As has been described above, according to this embodiment, the NEF 11e or the SENSING 11n as a control unit can receive a plurality of entries and selection conditions for selecting the entries in a Subscribe message, and can set the conditions specified by the entry as the sensing conditions when the selection condition is satisfied.

According to this embodiment, the NEF 11e or the SENSING 11n as a control unit can specify a logical expression for a plurality of element conditions and a plurality of selection conditions. When the logical expression of the element conditions is true, the control unit can determine that the target satisfies the selection condition, and extract and notify sensing information. When the logical expression of the selection conditions is true, the control unit can adopt the sensing conditions (the logical expression of the element conditions) of the entry and set these sensing conditions as the sensing conditions. For example, the NEF 11e can determine the sensing information in accordance with the logical expression of the element conditions of the entry when the logical expression of the selection conditions is true, and can request the SENSING 11n to notify the sensing information when the sensing information makes the logical expression true. When the logical expression of the element conditions is true, the SENSING 11n can notify the sensing information to the NEF 11e, and the NEF 11e can further notify the notified sensing information to the receiver 12a.

As has been described above, in this embodiment, the NEF 11e as a control unit receives a plurality of sets of sensing conditions specified by entries as identification information. Each set of sensing conditions is associated with a selection condition. The control unit selects a set of sensing conditions that satisfies the selection condition, and acquires sensing information from the detection target. Thus, this information communication system can conduct a sensing service while changing the sensing conditions according to the circumstances.

As described above, in FIG. 9, the NEF 11e or the SENSING 11n as a control unit acquires sensing information from the detection target by selecting sensing conditions that satisfy the selection condition, and extracts sensing information that satisfies the selected sensing conditions. Instead of such processing, the NEF 11e as a control unit may change the detection frequency according to the detected information. Here, the Subscribe message may be specified as follows.

### (Expression 2)

Subscribe
ENTRY1: element condition D1, element condition D2, ..., element condition DN, (Logical Expression R1), initial frequency,
selection condition T1, frequency F1, selection condition T2, frequency F2, ..., selection condition TK, frequency FK
Here, the element condition D1 etc. are the same as in (Expression 1) described above.

The element condition D1 is, for example, a speed V1 to a speed V2. The element condition D22 is, for example, a size S1 to a size S2. Similarly, the element condition DN specifies an attribute of the detection target. The initial frequency is a frequency that is set at first when the sensing service is requested by Subscribe.

The selection condition T1 is a condition obtained by subdividing one of the element condition D1, the element condition D2, ..., the element condition DN, or a condition obtained by subdividing one or more of these conditions and combining them. For example, it is assumed that the element condition D1 is a speed of 30 km to 60 km. In this case, the selection condition T1 is, for example, a speed of 40 km to 50 km. It is assumed that the element condition D2 is a size of 0.5 m to 5 m. In this case, the selection condition T2 is, for example, a speed of 40 km to 50 km and a size of 1 m to 2 m. The NEF 11e or the SENSING 11n as a control unit selects the frequency F1 when the selection condition T1 is satisfied. The same applies to the selection condition T2 to the selection condition TK.

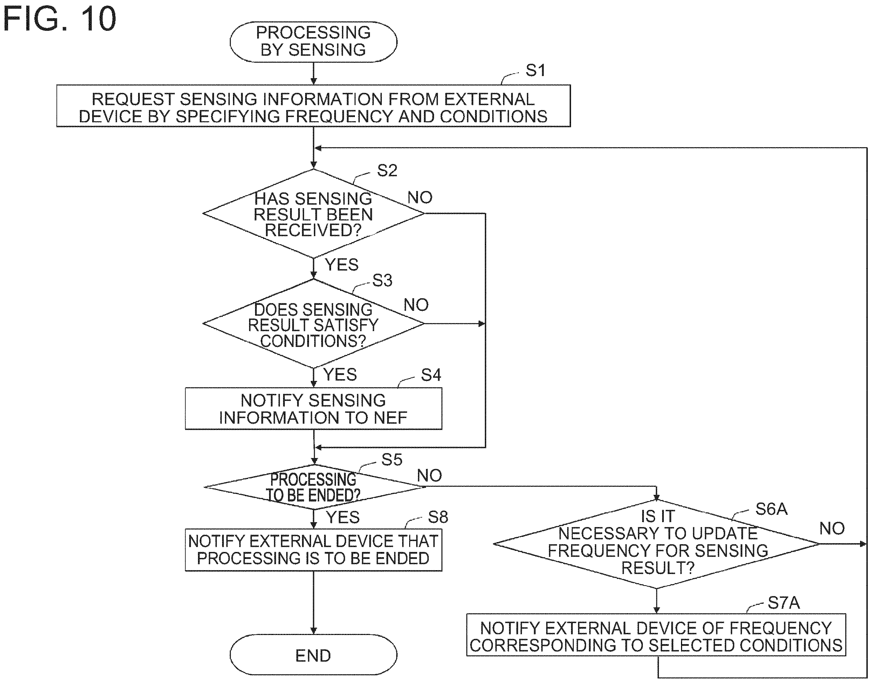

FIG. 10 is a flowchart showing an example of processing by the SENSING 11n according to this modified example. In this processing, processing from S1 to S5 and S8 is the same as in FIG. 7 and therefore description thereof will be omitted. When the determination in S5 found that the SENSING 11n is not to end the processing, the SENSING 11n determines whether it is necessary to update the frequency for the sensing result (S6A). That is, the SENSING 11n determines whether the attribute of the detection target sensed from the current detection target satisfies one of the selection condition T1 to the selection condition TK. When the attribute of the detection target sensed satisfies one of the selection condition T1 to the selection condition TK, for example, the selection condition T1, the SENSING 11n selects the frequency F1 corresponding to the selection condition T1 that is one example of the second detection frequency, and notifies an Update message to the external device 13 (S7A).

It is not that the processing of FIG. 10 is limited to the SENSING 11n. For example, instead of the SENSING 11n, the NEF 11e may execute the processing of FIG. 10. In the case where the NEF 11e executes the processing of FIG. 10, in the processing of S7A, the NEF 11e can select the frequency F1 corresponding to the selection condition T1 satisfied by the attribute of the detection target, and can notify an Update message to the SENSING 11n.

According to the modified example having been described above, the information communication system can provide a sensing service with an appropriate frequency set according to the attributes of the detection target.

The above-described embodiments are merely examples, and this disclosure can be implemented with changes made thereto as appropriate within such a range that no departure is made from the gist of the disclosure. The processes and means described in this disclosure can be implemented in free combinations as long as no technical inconsistency arises.

A process that has been described as a process to be performed by one device may be divided and executed by a plurality of devices. Or processes that have been described as processes to be performed by different devices may be executed by one device. In a computer system, changes can be flexibly made as to what hardware configuration (server configuration) realizes each function.

This disclosure can also be realized by supplying a computer program equipped with the functions described in the above embodiments to a computer, and retrieving and executing the programs by one or more processors belonging to the computer. Such a computer program may be provided to a computer by a non-transitory computer-readable storage medium that can be connected to a system bus of the computer, or may be provided to a computer through a network. Examples of non-transitory computer-readable storage media include disks of arbitrary types such as magnetic discs (floppy (R) discs, hard disc drives (HDDs), etc.) and optical discs (CD-ROMs, DVD discs, Blu-ray Discs, etc.), and media of arbitrary types suitable for storing electronic commands such as read-only memories (ROMs), random-access memories (RAMs), EPROMs, EEPROMs, magnetic cards, flash memories, and optical cards.

## Claims

1. An information communication system (1) comprising a controller configured to:
in response to a request from a requestor, respond with information relating to a detection target;
receive an indication of a frequency at which the controller should respond with the information; and
respond with the information based on the received indication.

2. The information communication system (1) according to claim 1, wherein the controller is configured to receive, from the requestor, a detection condition for detecting the information and a detection frequency applicable for the detection condition.

3. The information communication system (1) according to claim 2, wherein the detection condition includes at least one of whether the detection target is moving, a moving speed of the detection target, a size of the detection target, a history of the information in the detection target, an area where the detection target is located, a position of the detection target, and a degree of confidence required for the information.

4. The information communication system (1) according to claim 2, further comprising a detector configured to detect information relating to the detection target, wherein:
the controller is configured to subscribe to detection by specifying the detection frequency and the detection condition to the detector;
the detector is configured to notify the controller of the information that satisfies the detection condition; and
the controller is configured to notify the requestor of the information notified from the detector.

5. The information communication system (1) according to claim 4, wherein the detector is configured to change the detection frequency according to the information to be detected.

6. The information communication system (1) according to any preceding claim, wherein the information is dynamic information on a target relating to geographical information when the target undergoes temporal changes.

7. The information communication system (1) according to any preceding claim, wherein:
the controller is configured to receive a plurality of detection conditions identified by identification information;
each of the detection conditions is associated with a selection condition; and
the controller is configured to select the detection condition that satisfies the selection condition and select the information relating to the detection target.

8. A control device (11) included in an information communication system (1) configured to, on request from a requestor, respond with information relating to a detection target, the control device (11) comprising a processor configured to:
receive an indication of a frequency at which the processor should response with the information; and
respond with the information based on the received indication.

9. The control device (11) according to claim 8, wherein the processor is configured to receive, from the requestor, a detection condition for detecting the information and a different detection frequency applicable for the detection condition.

10. The control device (11) according to claim 9, wherein the detection condition includes at least one of whether the detection target is moving, a moving speed of the detection target, a size of the detection target, a history of the information in the detection target, an area where the detection target is located, a position of the detection target, and a degree of confidence required for the information.

11. The control device (11) according to claim 8, wherein the information is dynamic information on a target relating to geographical information when the target undergoes temporal changes.

12. The control device (11) according to any of claims 8 to 11, wherein:
the processor is configured to receive a plurality of detection conditions identified by identification information;
each of the detection conditions is associated with a selection condition; and
the processor is configured to select the detection condition that satisfies the selection condition and select the information relating to the detection target.

13. An information communication method for, on request from a requestor, responding with information relating to a detection target, the method comprising:
receiving an indication of a frequency at which a response should be sent with the information; and
responding with the information based on the received indication.

14. The information communication method according to claim 13, further comprising receiving, from the requestor, a detection condition for detecting the information and a different detection frequency applicable for the detection condition.

15. The information communication method according to claim 14, wherein the detection condition includes at least one of whether the detection target is moving, a moving speed of the detection target, a size of the detection target, a history of the information in the detection target, an area where the detection target is located, a position of the detection target, and a degree of confidence required for the information.
